# EUROPÄISCHE PATENTSCHRIFT

(11) **EP 2 530 135 B1**
(45) Veröffentlichungstag und Bekanntmachung des Hinweises auf die Patenterteilung: **25.05.2022**
(21) Anmeldenummer: 11168085.6
(22) Anmeldetag: 30.05.2011
(51) Int. Cl.: C10G 1/00, C10G 31/06, C10G 31/10, C10B 53/00, B04B 1/00, B04B 5/10, B04B 15/02, C10B 53/02, C10C 5/00, C10G 3/00

(54) **Verfahren zur Klärung von Pyrolyseöl**
Method for purifying pyrolysis oil
Procédé destiné à la clarification d'huile de pyrolyse

(43) Veröffentlichungstag der Anmeldung: 05.12.2012
(73) Patentinhaber: GEA Mechanical Equipment GmbH, 59302 Oelde (DE)
(72) Erfinder: Mense, Martin, 59302 Oelde (DE); Fernkorn, Nick, 59269 Beckum (DE); Combrink, Sascha, 59302 Oelde (DE); Mackel, Jürgen, 59302 Oelde (DE)
(74) Vertreter: Kleine, Hubertus

(56) Entgegenhaltungen:
- WO-A1-2010/075429
- US-A- 4 894 140
- US-A- 5 115 084
- US-A1- 2006 000 787
- US-A1- 2006 070 912
- US-A1- 2010 170 147

## Beschreibung

Die vorliegende Erfindung betrifft ein Verfahren zur Klärung von Pyrolyseöl.

Pyrolyseöl kann durch Aufspaltung aus Biomasse gewonnen werden. Sofern es jedoch zum Einsatz des Pyrolyseöls als Kraftstoff kommt, ist es von Vorteil das Pyrolyseöl zuvor möglichst weitestgehend von abrasiven Feststoffen zu befreien.

Aufgrund der dem Pyrolyseöl innewohnenden Stoffeigenschaften ist eine Aufarbeitung mit konventionellen Zentrifugal-Separator-Systemen nicht möglich, wie sie u.a. bei der Aufbereitung von Schweröl oder Heizöl Anwendung finden. So besitzt Pyrolyseöl im Gegensatz zu Heizöl u.a. einen hohen Anteil an agressiven Carbonsäuren und verfügen über keinerlei Schmierfähigkeit.

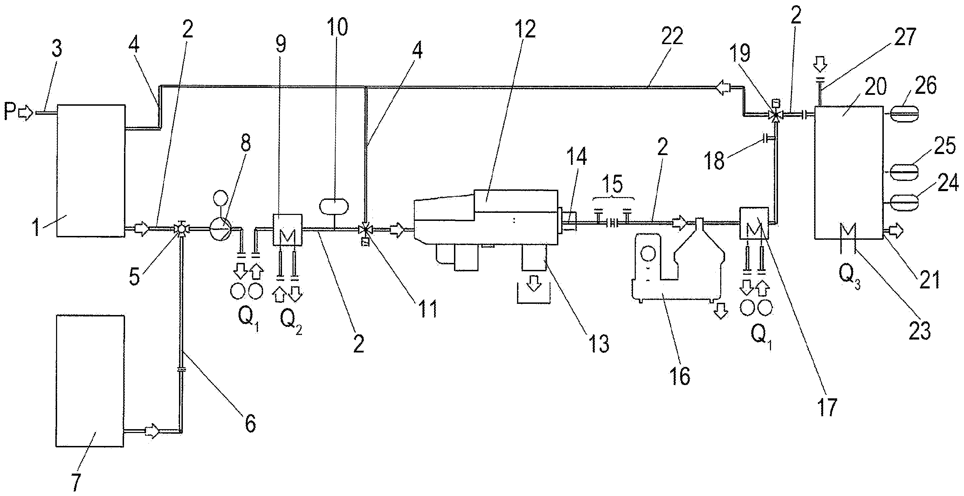

Die US 2006 000 787 A1 offenbart in Fig. 1 ein Verfahren zur Aufarbeitung von verunreinigtem Öl durch eine Zentrifuge. Hierbei wird das Öl mittels eines Wärmetauscher 14 von einer Initialtemperatur von 82,2 °C auf eine Temperatur von 104,4 °C erwärmt und durch eine Kombination aus Filter 16 und Zentrifuge 12 gereinigt. Nach der Reinigung wird das Öl durch einen Wärmetauscher 24 auf eine Temperatur zwischen 82,2 und 93,3 °C (entspricht 200°F) abgekühlt. Dies wird auch als Lagertemperatur für das Öl angegeben.

Weiter offenbart die US 2006 00787 A1 in Fig. 3 ein Verfahren in welchem in einer Zentrifuge eine leichtere (aufgereinigte) Ölphase und eine schwerere Ölphase als Schlamm abgetrennt wird. Dieser Schlamm (und nicht das aufgereinigte Öl) wird sodann in einen oder mehrere Mischtanks 34 überführt, welche integrierte Heizspindeln aufweisen. Von dort aus, wird der ölhaltige Schlamm in eine Zentrifuge, in der Ausgestaltung als Dekanter 28, überführt und die Feststoffe werden abgetrennt. Die Eingangstemperatur in den Dekanter 28 kann dabei zwischen 24°C bis 135 °C liegen.

US 4 894 140 offenbart ein Verfahren zur Klärung von Pyrolyseöl.

Es ist daher die Aufgabe der Erfindung, ein Verfahren bereitzustellen mit denen der Feststoffgehalt dieses speziellen Produktes verringert werden, so dass es sich für den Einsatz als Kraftstoff, insbesondere in Verbrennungsmaschinen mit entsprechenden Einspritzsystemen, eignet.

Die Erfindung löst diese Aufgabe durch die Merkmale des Anspruchs 1.

Durch die Verringerung der Viskosität des bei Raumtemperatur hochviskosen Pyrolyseöls wird das zentrifugale Klären des Produktes Pyrolyseöl ermöglicht, wodurch das Pyrolyseöl beispielsweise als Kraftstoff in Verbrennungsmotoren genutzt werden kann.

Vorteilhafte Ausgestaltungen der Erfindung sind Gegenstand der Unteransprüche.

Dabei erfolgt das Klären des Pyrolyseöls vorteilhaft in einem Separator, insbesondere einem Zwei-Phasen Klärseparator oder einem 2-Phasen-Düsenseparator (zum Klären von Feststoffen durch die Düsen und zum Ableiten der geklärten Flüssigkeit zum Beispiel durch eine Schälscheibe). Dieser kann in einem einstufigen Klären des Pyrolyseöls eingesetzt werden oder in einem zweistufigen Klären für die Nachklärung nach einer vorausgegangenen Vorklärung genutzt werden.

Es ist von Vorteil, wenn das Erwärmen des Pyrolyseöls, gemäß Schritt b), temperaturgeregelt erfolgt, da das Pyrolyseöl temperaturempfindlich ist und bei höheren Temperaturen zur Polymerisation aber auch zur thermischen Zersetzung neigt.

Eine thermische Zersetzung von Pyrolyseöl im großen Umfang kann vorteilhaft vermieden werden, sofern das Erwärmen des Pyrolyseöls auf eine Temperatur von weniger als 70°C erfolgt. Um jedoch eine ausreichende Reduzierung der Viskosität zu gewährleisten, ist es von Vorteil, wenn das Erwärmen des Pyrolyseöls auf eine Temperatur im Bereich von 40-70°C erfolgt.

Bei Erwärmen des Pyrolyseöls über einen längeren Zeitraum hinweg, kann es vermehrt zu Polymerisationsreaktionen kommen. Dies würde die Viskosität des Pyrolyseöls wieder nachteilig erhöhen. Daher ist ein Erwärmen auf eine Temperatur im Bereich von 55-60°C besonders bevorzugt.

Eine thermische Zersetzung als auch beispielsweise eine Polymerisation kann weitestgehend verhindert werden, sofern das Abkühlen des Pyrolyseöls bereits kurz nach dem Klären des Pyrolyseöls erfolgt. Dabei ist es von Vorteil, wenn beim Abkühlen bei einer Temperaturabsenkung um 15-30 K in einer Zeit von weniger als 10 min erfolgt.

Insgesamt sollte die Verweildauer des Produktes bzw. einer Produktvolumeneinheit: z.B. eines Liters) im Prozess, d.h. die Zeitdauer vom Erreichen der maximalen Temperatur beim Erwärmen über das Klären bis zum Wiederabkühlen des Produktes vorzugsweise auf weniger als 40° vorzugsweise kürzer als 20 min sein.

Dabei ist es besonders vorteilhaft, wenn das Abkühlen unter Austausch einer Wärmemenge Q₁ zwischen dem Pyrolyseöl nach dem Klären, gemäß Schritt a), und dem Pyrolyseöl vor dem Erwärmen, gemäß Schritt b), erfolgt. Dadurch erfolgt eine bessere Ausnutzung der dem Verfahren zugeführten Wärme. Das Verfahren kann somit energieeffizienter arbeiten.

Alternativ kann das Verfahren auch derart ausgestaltet werden, dass ein Zuschalten der ersten Zentrifuge zum Vorklären in Abhängigkeit vom Feststoffgehalt des Pyrolyseöls erfolgt. Sofern der Feststoffgehalt des Pyrolyseöls jedoch nur gering ist, kann vorteilhaft eine einstufige Klärung durch die zweite Zentrifuge zum Nachklären erfolgen, wobei die erste Zentrifuge beispielsweise durch eine Bypassleitung umgangen wird.

Dabei kann das Vorklären des Pyrolyseöls durch einen Klärdekanter, insbesondere einen Zwei-Phasen Klärdekanter, oder einen 2-Phasen-Düsenseparator und das Nachklären des Pyrolyseöls durch einen Separator, insbesondere einen Zwei-Phasen Klärseparator, erfolgen.

Zum Erwärmen des Pyrolyseöls gemäß Schritt b) sollte eine Wärmequelle zumindest an den produktberührenden Segmenten aus einem gegenüber Pyrolyseöl beständigen Material gefertigt sein. Dabei kann das Erwärmen vorteilhaft durch einen Plattenwärmetauscher, einen Rohrbündelwärmetauscher oder einen Elektrovorwärmer erfolgen. Diese Wärmequellen erlauben eine Begrenzung der Temperatur bzw. der Oberflächenlast zur Vermeidung unzulässig hoher Filmtemperaturen. Selbstverständlich kann das Erwärmen vorteilhaft auch schrittweise erfolgen durch Nutzung mehrerer der oben genannten Wärmequellen hintereinander, wobei die Temperatur des Pyrolyseöls schrittweise einem vorgegebenen Sollwert angenähert werden kann.

Zur Vermeidung von unzulässig hohen Film-Temperaturen sollte hierbei die Heizmedium-Temperatur für die Wärmetauscher vorzugsweise kleiner als 100°C sein, bzw. die Oberflächenlast von Elektrovorwärmern kleiner als 0,8 W/cm² sein.

Vorteilhaft erfolgt nach dem Erwärmen des Pyrolyseöls gemäß Schritt b) ein Erfassen eines Istwertes einer ersten Prozessgröße und ein Klären des Pyrolyseöls, sofern ein Sollwert der ersten Prozessgröße überschritten ist. Dabei werden Störungen des Betriebes der nachgeschalteten Zentrifuge vermieden, sofern die Viskosität des Pyrolyseöls für eine Klärung noch nicht ausreichend ist.

Als erste Prozessgrößen können die Temperatur des Pyrolyseöls, die Viskosität des Pyrolyseöls, die Dichte des Pyrolyseöls und/oder daraus ableitbare Prozessgrößen genutzt werden.

Es ist von Vorteil, wenn eine Rückführe in einen Tank mit ungeklärtem Pyrolyseöl erfolgt, sofern der Sollwert der ersten Prozessgröße nicht überschritten wird. Dadurch wird das bereits teilerwärmte Pyrolyseöl energetisch vorteilhaft genutzt, um die im Tank befindliche Menge an Pyrolyseöl zu erwärmen.

Das Abführen bzw. Ableiten des Pyrolyseöls aus dem Prozess kann in einen Vorratstank in Abhängigkeit von einer zweiten Prozessgröße erfolgen. Bevorzugt ist die zweite Prozessgröße der Füllstand des Vorratstankes. Hierdurch wird der kontinuierliche Aufbereitungsprozess bei gefülltem Vorratstank nicht unterbrochen und ein füllstandsbedingtes Ab- und Anfahren der Anlage wird vorteilhaft vermieden.

Für eine zuverlässige und umfangreiche Klärung von Pyrolyseöl bietet sich bevorzugt zumindest ein Separator, insbesondere ein 2-Phasen Klärseparator oder ein 2-Phasen-Düsenseparator an.

Die Zentrifuge ist vorteilhaft derart ausgestaltet, dass sie den produkttypischen Eigenschaften des Pyrolyseöls standhält. Dies betrifft neben der hohen Viskosität u.a. auch die starke Korrosionsneigung und die mangelnde Schmierfähigkeit von Pyrolyseöl. Um eine Korrosion bei längerem Gebrauch vorteilhaft zu vermeiden ist es von Vorteil, wenn die Zentrifuge eine Innenwandung und/oder produktberührende Teile aus einem besonders korrisionsbeständigen Stahl, insbesondere Superduplex, vorzugsweise mit einem PRE-Index (Pitting Resistant Equivalent - Index: beschreibt das Lochkorrosionsverhalten aufgrund definierter legierungsbestandteile) von kleiner als 40 aufweist. Zudem ist es von Vorteil, wenn die Zentrifuge Dichtungen aufweist, welche zumindest ein polyfluoriertes ,Material und/oder ein Polyamid und/oder einen Perfluorkautschuk aufweisen oder insbesondere daraus bestehen.

Um der Zersetzung und Polymerisierungsneigung bei höheren Temperaturen entgegenzuwirken, ist es von Vorteil wenn die Anlage Mittel zum Abkühlen von Pyrolyseöl nach dem Klären in der Zentrifuge aufweist.

Es ist von Vorteil, wenn die Anlage einen Tank für ungeklärtes Pyrolyseöl, einen Vorratstank für geklärtes Pyrolyseöl und einen Tank für einen Kraftstoff oder ein Spülmedium aufweist. Letzterer Tank ermöglicht das Zuführen eines Spülmediums, vorzugsweise für einen diskontinuierlichen Reinigungsprozess.

Die Tanks können alternativ auch außerhalb der Anlage angeordnet sein.

Ebenfalls für einen Reinigungsprozess weist die Anlage, insbesondere an den Leitungen, Spülanschlüsse zum sequentiellen Fluten der Anlage mit dem Spülmedium auf. Dadurch können beispielsweise einzelne Bereiche der Anlage gereinigt werden.

Nachfolgend wird ein Ausführungsbeispiel der Erfindung anhand der beigefügten Fig.1 näher erläutert. Sie zeigt:
Fig.1 eine schematische Darstellung einer Anlage zur Klärung von Pyrolyseöl.

Zum besseren Verständnis der physikalischen und chemischen Eigenschaften von Pyrolyseöl wird nachfolgen ein Pyrolyseöl anhand des Heizwertes, der Dichte, der Viskosität und des Feststoffgehaltes näher charakterisiert. Dabei sind die angegebenen Werte lediglich beispielhaft für ein Pyrolyseöl. Selbstverständlich fallen auch Öle, welche nicht durch die nachfolgend genannten Zahlenbereiche erfasst sind, jedoch ähnliche Eigenschaften aufweisen, unter die Definition eines Pyrolyseöls.

Pyrolyseöl, welches u.a. aus Biomasse herstellbar ist, findet aufgrund seines Heizwertes von etwa 15-18 MJ/kg u.a. Verwendung als Biokraftstoff. Dabei weist das Pyrolyseöl, nach dessen Gewinnung, eine zähflüssige, sirupartige Konsistenz auf, für die beispielsweise eine Viskosität im Bereich von 173,4 cSt und eine Dichte im Bereich von 1,211 g/ml, gemessen bei 23°C, aufweist. Pyrolyseöl weist zudem einen pH-Wert von 2,5-3,5 auf. Dieser niedrige pH-Wert wird durch aggressive Carbonsäuren, insbesondere Ameisen- oder Essigsäure) in dem Pyrolyseöl erreicht. Zugleich weist Pyrolyseöl einen Feststoffgehalt von bis zu 25 Vol.-%, meist jedoch von 0,1-20 Vol.-%, auf.

Um eine Klärung eines Pyrolyseöls zu erzielen, wird die in Fig.1 dargestellte Anlage genutzt, welche nach einer bevorzugten Variante des erfindungsgemäßen Verfahrens arbeitet.

Nach dessen Gewinnung, wird das Pyrolyseöl in einem Tank 1 bei vorzugsweise 20-25°C gelagert. Die Lagerung erfolgt besonders bevorzugt unter einer Stickstoffatmosphäre. Dabei weist der Tank 1, neben der nicht näher dargestellten Stickstoffzuführung, mehrere Leitungen auf. Eine erste Leitung 2 dient zum Abführen von Pyrolyseöl aus dem Tank 1. Eine zweite Leitung 3 dient zum Zuführen von Pyrolyseöl aus dem Herstellungsprozess in den Tank 1. Eine dritte Leitung 4 dient zum Produktrücklauf aus dem Prozesskreislauf.

Aus dem Tank 1 wird Pyrolyseöl mittels einer Zulaufpumpe 8 gefördert. Vor der Zulaufpumpe 8 ist auf der ersten Leitung 2 ein 3/2-Wege Umschaltventil 5 angeordnet. Durch dieses 3/2-Wege Umschaltventil kann der restlichen Anlage zusätzlich Stand-by-Kraftstoff oder ein Spülmedium aus einem Vorlagentank 7 zugeführt werden. Dabei zweigt sich am 3/2-Wege Umschaltventil von der ersten Leitung 2 eine vierte Leitung 6 ab, welche die restliche Anlage mit Vorlagentank 7 verbindet. Die Zulaufpumpe 8 fördert dabei je nach Schaltung des 3/2-Wege Umschaltventils den besagten Kraftstoff oder das Spülmedium aus dem Vorlagentank 7 oder das Pyrolyseöl aus dem Tank 1. Dabei ist die Zulaufpumpe 8 vorteilhaft als Kreiselpumpe ausgestaltet und ist mit Hinblick auf die Materialeigenschaften des Pyrolyseöls ausgewählt.

Anschließend wird das Pyrolyseöl durch einen ersten Vorwärmer, hier durch einen Wärmetauscher 17, geleitet. Dabei wird eine Wärmemenge Q₁ durch den Wärmetauscher an das Pyrolyseöl abgegeben. Anschließend wird das Pyrolyseöl durch einen zweiten Vorwärmer 9 geleitet, welcher die Wärmemenge Q₂ an das Pyrolyseöl abgibt. Als Wärmetauscher können vorzugsweise Plattenwärmetauscher oder Rohrbündelwärmetauscher eingesetzt werden. Als zweiter Vorwärmer 9 werden bevorzugt Plattenwärmetauscher, Rohrbündelwärmetauscher oder Elektrovorwärmer eingesetzt. Durch die Vorwärmer wird das Pyrolyseöl auf eine Temperatur von 40-70°C erwärmt, vorzugsweise von 55-60°C.

Anschießend wird der Durchfluss an Pyrolyseöl durch die erste Leitung 2 mittels eines Durchflussmessers 10 ermittelt. Dies kann beispielsweise durch Ermittlung des Volumenstroms an Pyrolyseöl erfolgen, welches in einer bestimmten Zeit einen bestimmen Abschnitt der ersten Leitung 2 passiert.

Der ermittelte Volumenstrom des Pyrolyseöls bei der durch die beiden Vorwärmer eingestellten Temperatur entspricht der Aufbereitungszulaufleistung. Nach dem Durchflussmesser ist ein 3/2-Wege Zulaufventil 11 auf der ersten Leitung 2 angeordnet, wobei sich an diesem 3/2-Wege Zulaufventil 11 die dritte Leitung 4 zum Produktrücklauf von der ersten Leitung 2 abzweigt. Dieses 3/2-Wege Zulaufventil schaltet auf die dritte Leitung 4 zur Produktrückführung zum Tank 1 um, bis das Pyrolyseöl durch die Vorwärmer auf eine vorbestimmte Temperatur erwärmt wurde. Auch bei Systemstörungen oder bei einem diskontinuierlichen Selbstreinigungszyklus einer nachgeschalteten Maschine, insbesondere eines nachgeschalteten Zwei-Phasen Klärseparators 16, schaltet das 3/2-Wege Zulaufventil 11 auf die dritte Leitung 4 um und erlaubt eine Rückführung des Pyrolyseöls in den Tank 1.

Sofern das Pyrolyseöl die entsprechende Prozesstemperatur durch die Vorwärmer 17 und 9 erreicht hat, wird es in einen Zwei-Phasen Dekanter 12 weitergeleitet. Hier erfolgt eine Vorklärung des Pyrolyseöls in einen Schlamm, welcher durch den Feststoffaustrag 13 am Zwei-Phasen Dekanter 12 abgeführt wird und ein vorgeklärtes Pyrolyseöl, welches durch eine Flüssigkeitsaustragsleitung 14 den Dekanter 12 verlässt. Die Flüssigkeitsaustragsleitung mündet in der ersten Leitung 2, welche das vorgeklärte Pyrolyseöl vom Zwei-Phasen Klärdekanter 12 zu einem selbstreinigenden Zwei-Phasen Klärseparator 16 weiterleitet. Hier erfolgt die Nachklärung des vorgeklärten Pyrolyseöls, in ein geklärtes Pyrolyseöl und in Separatorschlamm.

Anschließend wird das geklärte Pyrolyseöl abgekühlt. Dies erfolgt vorzugsweise in dem Wärmetauscher 17, durch Abgabe der Wärmemenge Q₁ an das Pyrolyseöl aus dem Tank 1. Die Übergabe der Wärmemenge Q₁ ist dabei idealisiert dargestellt und erfolgt selbstverständlich unter Wärmeverlust an die Umgebung und ist daher nicht vollständig. Dabei wird das geklärte Pyrolyseöl über die erste Leitung 2 von dem selbstreinigenden Zwei-Phasen Klärseparator 16 an den Wärmetauscher 17 weitergeleitet, wo es auf eine Temperatur von weniger als 50°C abgekühlt wird. Von dort aus wird das geklärte Pyrolyseöl an einen Vorratstank 20 über die erste Leitung 2 weitergeleitet.

Zwischen dem Wärmetauscher 17 und dem Vorratstank 20 ist ein 3-Wege Umschaltventil 19 angeordnet. Am Umschaltventil zweigt eine fünfte Leitung 22 ab. Diese mündet in der dritten Leitung 4 für den Produkt-Rücklauf. Dieses Ventil schaltet automatisch in Abhängigkeit des Füllstandes im Vorratstank 20. Sofern der Vorratstank 20 kein weiteres Pyrolyseöl aufnehmen kann, erfolgt ein Umschalten des 3-Wege Umschaltventils 19 auf die Leitung 22, so dass der Aufbereitungsprozess zum Entleeren des Vorratstankes 20 durch Abführen des Pyrolyseöls aus der Ableitung 21 nicht unterbrochen werden muss. Ein Ab und Anfahren der Anlage wird dadurch vorteilhaft verhindert.

Zur Gewährleistung einer ausreichend pumpfähigen, niedrigen Viskosität, beispielsweise zur Weiterförderung, weist der Vorratstank 20 eine Wärmequelle 23 zum Zuführen einer Wärmemenge Q₃ auf. Zur Überwachung des Füllstandes sind am Vorratstank 20 die mehrere Füllstandssensoren 24-26 angeordnet. Darüber hinaus ist am Vorratstank 20 eine Stickstoffzuleitung 27 angeordnet, um das Pyrolyseöl unter Schutzgas, vorzugsweise Stickstoff, zu lagern.

Der Vorratstank 20 kann optional auch außerhalb der Anlage angesiedelt sein und gleichzeitig die Funktion eines Vorlage-Pufferbehälters eines nachgeschalteten Kraftstoff-Versorgungs- und Konditionierungssystems von Verbrennungsmaschinen wahrnehmen.

Zwischen dem Zwei-Phasen Dekanter 12 und dem Klärdekanter 16 als auch zwischen dem Wärmetauscher 17 und dem 3-Wege Umschaltventil 19 sind entlang der ersten Leitung 2 einer oder mehrere Spülanschlüsse 15 und 18 angeordnet. Da das Pyrolyseöl unter Umständen zu Anhaftungen an der Wandung einer Leitung neigt, ist es ratsam von Zeit zu Zeit die Leitungen zu reinigen.

Die in Fig. 1 dargestellte Anlage geht von einem Verfahren mit einer zweistufigen Klärung des Pyrolyseöls aus.

In einer weiteren bevorzugten Ausführungsvariante des erfindungsgemäßen Verfahrens kann das Klären des Pyrolyseöls in einer einstufigen zentrifugalen Feststoff/Sediment-Abtrennung erfolgen. Dies ist insbesondere dann der Fall, wenn das Pyrolyseöl nur einen geringen Gehalt an Feststoffen, vorzugsweise von weniger als 5 Vol.-%, aufweist. Dies erfolgt in einer besonders bevorzugten Weise, durch einen selbstreinigenden Zwei-Phasen Klärseparator 16.

In einer weiteren bevorzugten Ausführungsvariante des erfindungsgemäßen Verfahrens kann das Klären des Pyrolyseöls sowohl als einstufige zentrifugalen Feststoff/Sediment-Abtrennung oder als zweistufige Klärung erfolgen, indem in der in Fig.1 dargestellten Anlage eine Bypassleitung mit entsprechenden Absperrventilen derart angeordnet ist, dass der Zwei-Phasen Klärdekanter nur bei Bedarf zugeschaltet wird und bei geringem Feststoffgehalt das Pyrolyseöl nicht durch den Zwei-Phasen Klärdekanter, sondern daran vorbeigeführt wird. Alternativ kann prinzipiell anstelle des 2-Phasen Klärseparators auch ein Düsen-Separator eingesetzt werden.

Nachfolgend wird die bevorzugte Ausgestaltungsvariante des Verfahrens zur Klärung eines Pyrolyseöls, wie es in der Anlage in Fig.1 ausgeführt wird, näher erläutert.

Zunächst erfolgt ein Zuführen eines ungeklärten Pyrolyseöls in die Anlage, vorzugsweise in den Tank 1, beispielsweise aus einem vorhergehenden Herstellungsverfahren.

Anschließend erfolgt ein Zuleiten des Pyrolyseöls in den ersten Vorwärmer 17. Dies geschieht mittels einer Zulaufpumpe, welche mit Hinblick auf das zu verarbeitende korrosive und zähflüssige Produkt ohne Schmiereigenschaften entsprechend ausgewählt wird. Dabei passiert das Pyrolyseöl das 3/2-Wege Umschaltventil 5, welches ein alternativ zum Zuleiten eines Pyrolyseöls ein Zuleiten eines Spülmediums aus dem Vorlagentank in die Anlage ermöglicht.

Nach dem Zuleiten des Pyrolyseöls wird dieses durch den ersten Vorwärmer 17 und den zweiten Vorwärmer 9 auf eine Temperatur im Bereich von 40-70°C, vorzugsweise 55-60°C erwärmt.

Nach dem Erwärmen wird das Pyrolyseöl in Abhängigkeit von der Temperatur entweder in den Zwei-Phasen Klärdekanter geleitet oder, sofern die Temperatur nicht ausreichend ist, über die dritte Leitung 4 in den Tank 1 zurückgeleitet.

An das Erwärmen schließt sich im vorliegenden Beispiel ein Vorklären durch den Zwei-Phasen Klärdekanter 12 an, in welchem der Feststoffgehalt vorzugsweise um mindestens die Hälfte verringert wird.

Von dem Zwei-Phasen Klärdekanter 12 wird das vorgeklärte Pyrolyseöl in den Zwei-Phasen Klärseparator 16 übergeleitet. Dieser Klärseparator ermöglicht eine Nachklärung auf einen Feststoffgehalt von vorzugsweise weniger als 1 Vol.%.

Dabei sind die produktberührenden Teile des Zwei-Phasen Klärseparators als auch des Zwei-Phasen Klärdekanters aus gegenüber dem Pyrolyseöl chemisch beständigen Materialien gefertigt. So müssen die produktberührenden Teile und die Innenwandung der jeweiligen Zentrifugentrommel aus Superduplex, vorzugsweise mit einem PRE-Index von größer als 40, gefertigt sein. Als Material für die Dichtungen werden vorzugsweise polyfluorierte Materialien, insbesondere Polytetrafluorethylen (PTFE) oder Perfluorkautschuk (FFKM) und/oder Polyamid verwandt.

Im Anschluss an die Nachklärung wird das geklärte und erwärmte Pyrolyseöl durch Abkühlen auf eine Temperatur von weniger als 40°C gebracht. Dadurch wird eine Polymerisation als auch eine thermische Zersetzung weitestgehend vermieden. Dabei kann, in energetisch vorteilhafter Weise, das ungeklärte noch nicht erwärmte Pyrolyseöl aus dem Tank 1 als Gegenstrom im erste Vorwärmer 17 eingesetzt werden.

Schließlich erfolgt ein Überführen des Pyrolyseöls in einen Vorratstank 20. Dabei wird das Pyrolyseöl vorzugsweise sowohl im Tank 1 als auch im Vorratstank 20 unter Schutzgas, insbesondere unter Stickstoff, gelagert.

Zur Beheizung des Vorratstanks 20 wird als Wärmequelle 23 vorzugsweise eine elektrische Beheizung/Begleitheizung an der Behälter-Außenfläche eingesetzt. Dies hat den Vorteil, dass eine zu übertragende Wärmemenge Q₃ über die große Oberfläche an das Medium abgegeben wird und somit lokale Anbackungen an Oberflächen, sowie eine thermische Zersetzung oder Polymerisation des Pyrolyseöls verhindert wird. Das Produkt wird derart fließfähig gehalten, vorzugsweise auf eine Temperatur von weniger als 40° C, um ein Zersetzen zu vermeiden.

### Bezugszeichenliste:

1 Tank
2 erste Leitung
3 zweite Leitung
4 dritte Leitung
5 3/2-Wege Umschaltventil
6 vierte Leitung
7 Vorlagentank
8 Zulaufpumpe
9 Vorwärmer
10 Durchflussmesser
11 3/2-Wege Zulaufventil
12 Zwei-Phasen Klärdekanter
13 Feststoffaustragsleitung
14 Flüssigkeitsaustragsleitung
15 Spülanschluss
16 Zwei-Phasen Klärseparator
17 Vorwärmer
18 Spülanschluss
19 3-Wege Umschaltventil
20 Vorratstank
21 Ableitung
22 fünfte Leitung
23 Wärmequelle
24 Füllstandssensor
25 Füllstandssensor
26 Füllstandssensor
27 Stickstoffzuleitung

Q₁, Q₂, Q₃ Wärmemengen

## Patentansprüche

1. Verfahren zur Klärung von Pyrolyseöl, wobei das Verfahren zumindest folgende Schritte aufweist:
a) zumindest ein Klären des Pyrolyseöls in einer Zentrifuge und
b) vor und/oder während des Klärens, gemäß Schritt a), ein Erwärmen des Pyrolyseöls zur Verringerung der Viskosität des Pyrolyseöls erfolgt,
wobei das Klären des Pyrolyseöls, gemäß Schritt a) mehrstufig, mit zumindest einer ersten Zentrifuge zum Vorklären und zumindest einer zweiten Zentrifuge zum Nachklären, erfolgt und
wobei nach dem Klären des Pyrolyseöls, gemäß Schritt a) ein Abkühlen des Pyrolyseöls erfolgt,
wobei das Abkühlen des Pyrolyseöls derart erfolgt, dass nach 10 min nach dem Klären des Pyrolyseöls gemäß Schritt a) die Temperatur des Pyrolyseöls weniger als 40°C beträgt.

2. Verfahren nach einem der vorhergehenden Ansprüche, **dadurch gekennzeichnet, dass** das Abkühlen unter Austausch einer Wärmemenge Q₁ zwischen dem Pyrolyseöl nach dem Klären, gemäß Schritt a), und dem Pyrolyseöl vor dem Erwärmen, gemäß Schritt b), erfolgt.

3. Verfahren nach Anspruch 1 oder 2, **dadurch gekennzeichnet, dass** das Klären des Pyrolyseöls, in einem Separator, insbesondere einem Zwei-Phasen Klärseparator (16) oder einen Düsen-Separator, erfolgt.

4. Verfahren nach einem der vorhergehenden Ansprüche, **dadurch gekennzeichnet, dass** das Erwärmen des Pyrolyseöls, gemäß Schritt b), temperaturgeregelt erfolgt.

5. Verfahren nach einem der vorhergehenden Ansprüche, **dadurch gekennzeichnet, dass** das Erwärmen des Pyrolyseöls auf eine Temperatur von weniger als 70°C erfolgt.

6. Verfahren nach einem der vorhergehenden Ansprüche, **dadurch gekennzeichnet, dass** das Erwärmen des Pyrolyseöls auf eine Temperatur 40-70°C erfolgt.

7. Verfahren nach einem der vorhergehenden Ansprüche, **dadurch gekennzeichnet, dass** das Erwärmen des Pyrolyseöls auf eine Temperatur 55-60°C erfolgt.

8. Verfahren nach Anspruch 2, **dadurch gekennzeichnet, dass** das Abkühlen des Pyrolyseöls um 15-30 K in einer Zeit von weniger als 10 min erfolgt.

9. Verfahren nach Anspruch 1, **dadurch gekennzeichnet, dass** das Vorklären des Pyrolyseöls durch einen Klärdekanter, insbesondere einen Zwei-Phasen Klärdekanter (12), oder einen Düsen-Separator erfolgt.

10. Verfahren nach Anspruch 1 oder 2, **dadurch gekennzeichnet, dass** das Nachklären des Pyrolyseöls durch einen Separator, insbesondere einen Zwei-Phasen Klärseparator (16), erfolgt.

11. Verfahren nach einem der vorhergehenden Ansprüche, **dadurch gekennzeichnet, dass** ein Zuschalten der ersten Zentrifuge zum Vorklären in Abhängigkeit vom Feststoffgehalt des Pyrolyseöls erfolgt.

12. Verfahren nach einem der vorhergehenden Ansprüche, **dadurch gekennzeichnet, dass** das Erwärmen des Pyrolyseöls gemäß Schritt b) durch einen Vorwärmer (5, 17), insbesondere einen Plattenwärmetauscher, einen Rohrbündelwärmetauscher oder einen Elektrovorwärmer, erfolgt.

13. Verfahren nach einem der vorhergehenden Ansprüche, **dadurch gekennzeichnet, dass** nach dem Erwärmen des Pyrolyseöls gemäß Schritt b) ein Erfassen eines Istwertes einer ersten Prozessgröße erfolgt und ein Klären des Pyrolyseöls erst erfolgt, sofern ein Sollwert der ersten Prozessgröße überschritten ist.

14. Verfahren nach Anspruch 13, **dadurch gekennzeichnet, dass** ein Rückführen in einen Tank mit ungeklärtem Pyrolyseöl erfolgt, sofern der Sollwert der ersten Prozessgröße nicht überschritten wird.

15. Verfahren nach einem der Ansprüche 13 oder 14, **dadurch gekennzeichnet, dass** die Prozessgröße die Temperatur des Pyrolyseöls, die Viskosität des Pyrolyseöls, die Dichte des Pyrolyseöls und/oder daraus ableitbare Prozessgrößen sind.

16. Verfahren nach einem der vorhergehenden Ansprüche, **dadurch gekennzeichnet, dass** nach dem Klären des Pyrolyseöls, gemäß Schritt a), ein Abführen des geklärten Pyrolyseöls in einen Vorratstank (20) in Abhängigkeit von einer zweiten Prozessgröße erfolgt.

17. Verfahren nach Anspruch 16, **dadurch gekennzeichnet, dass** die zweite Prozessgröße der Füllstand des Vorratstankes (20) ist.

18. Verfahren nach einem der vorstehenden Ansprüche, **dadurch gekennzeichnet, dass** die Verweildauer des Produktes bzw. einer Produktvolumeneinheit im Prozess kürzer als 20 min ist.

## Claims

1. Method for clarifying pyrolysis oil, wherein the method comprises at least the following steps:
a) at least a clarification of the pyrolysis oil in a centrifuge, and
b) prior to and/or during clarification, according to step a), heating the pyrolysis oil to reduce the viscosity of the pyrolysis oil,
wherein the clarification of the pyrolysis oil, according to step a), is carried out in multiple stages, with at least one first centrifuge for pre-clarification and at least one second centrifuge for post-clarification, and
wherein after clarification of the pyrolysis oil, according to step a), cooling of the pyrolysis oil takes place,
wherein the cooling of the pyrolysis oil takes place in such a way that after 10 min after the clarification of the pyrolysis oil according to step a) the temperature of the pyrolysis oil is less than 40°C.

2. Method according to one of the preceding claims, **characterized in that** the cooling takes place with exchange of a quantity of heat Q₁ between the pyrolysis oil after clarification, according to step a), and the pyrolysis oil before heating, according to step b).

3. Method according to claim 1 or 2, **characterized in that** the clarification of the pyrolysis oil takes place in a separator, in particular a two-phase clarifying separator (16) or a nozzle separator.

4. Method according to one of the preceding claims, **characterized in that** the heating of the pyrolysis oil, according to step b), is carried out in a temperature-controlled manner.

5. Method according to one of the preceding claims, **characterized in that** the heating of the pyrolysis oil is carried out to a temperature of less than 70°C.

6. Method according to one of the preceding claims, **characterized in that** the heating of the pyrolysis oil is carried out to a temperature of 40-70°C.

7. Method according to one of the preceding claims, **characterized in that** the heating of the pyrolysis oil is carried out to a temperature of 55-60°C.

8. Method according to claim 2, **characterized in that** the cooling of the pyrolysis oil by 15-30 K takes place in a time of less than 10 min.

9. Method according to claim 1, **characterized in that** the pyrolysis oil is pre-clarified by a clarifying decanter, in particular a two-phase clarifying decanter (12), or a nozzle separator.

10. Method according to claim 1 or 2, **characterized in that** the post-clarification of the pyrolysis oil is carried out by a separator, in particular a two-phase clarifying separator (16).

11. Method according to one of the preceding claims, **characterized in that** the first centrifuge is switched on for pre-clarification as a function of the solids content of the pyrolysis oil.

12. Method according to one of the preceding claims, **characterized in that** the heating of the pyrolysis oil according to step b) is carried out by a preheater (5, 17), in particular a plate heat exchanger, a shell-and-tube heat exchanger or an electric preheater.

13. Method according to one of the preceding claims, **characterized in that** after the heating of the pyrolysis oil according to step b), a detection of an actual value of a first process variable is carried out and the pyrolysis oil is only clarified if a setpoint value of the first process variable is exceeded.

14. Method according to claim 13, **characterized in that** a return to a tank with unclarified pyrolysis oil takes place provided that the setpoint value of the first process variable is not exceeded.

15. Method according to one of claims 13 or 14, **characterized in that** the process variable is the temperature of the pyrolysis oil, the viscosity of the pyrolysis oil, the density of the pyrolysis oil and/or process variables derivable therefrom.

16. Method according to one of the preceding claims, **characterized in that**, after the pyrolysis oil has been clarified, according to step a), the clarified pyrolysis oil is discharged into a storage tank (20) as a function of a second process variable.

17. Method according to claim 16, **characterized in that** the second process variable is the filling level of the storage tank.

18. Method according to one of the preceding claims, **characterized in that** the residence time of the product or of a product volume unit in the process is shorter than 20 min.

## Revendications

1. Procédé pour l'épuration d'huile de pyrolyse, lequel procédé comprend au moins les étapes suivantes :
a) au moins une épuration de l'huile de pyrolyse dans une centrifugeuse et,
b) avant et/ou pendant l'épuration dans l'étape a), un chauffage de l'huile de pyrolyse pour diminuer sa viscosité,
dans lequel l'épuration de l'huile de pyrolyse dans l'étape a) s'effectue en plusieurs étapes, avec au moins une première centrifugeuse pour une préépuration et au moins une deuxième centrifugeuse pour une postépuration, et
dans lequel, après son épuration dans l'étape a), l'huile de pyrolyse est refroidie,
le refroidissement de l'huile de pyrolyse étant effectué de telle manière que 10 minutes après son épuration dans l'étape a), la température de l'huile de pyrolyse soit inférieure à 40 °C.

2. Procédé selon l'une des revendications précédentes, **caractérisé en ce que** le refroidissement s'effectue par échange d'une quantité de chaleur Q₁ entre l'huile de pyrolyse après l'épuration dans l'étape a) et l'huile de pyrolyse avant le chauffage dans l'étape b).

3. Procédé selon la revendication 1 ou 2, **caractérisé en ce que** l'épuration de l'huile de pyrolyse est effectuée dans un séparateur, en particulier un séparateur d'épuration à deux phases (16) ou un séparateur à buses.

4. Procédé selon l'une des revendications précédentes, **caractérisé en ce que** le chauffage de l'huile de pyrolyse dans l'étape b) est effectué avec une régulation de la température.

5. Procédé selon l'une des revendications précédentes, **caractérisé en ce que** l'huile de pyrolyse est chauffée jusqu'à une température inférieure à 70 °C.

6. Procédé selon l'une des revendications précédentes, **caractérisé en ce que** l'huile de pyrolyse est chauffée jusqu'à une température comprise entre 40 et 70 °C.

7. Procédé selon l'une des revendications précédentes, **caractérisé en ce que** l'huile de pyrolyse est chauffée jusqu'à une température comprise entre 55 et 60 °C.

8. Procédé selon la revendication 2, **caractérisé en ce que** l'huile de pyrolyse est refroidie de 15 à 30 K en moins de 10 minutes.

9. Procédé selon la revendication 1, **caractérisé en ce que** la préépuration de l'huile de pyrolyse est effectuée par un décanteur d'épuration, en particulier un décanteur d'épuration à deux phases (12) ou un séparateur à buses.

10. Procédé selon la revendication 1 ou 2, **caractérisé en ce que** la post-épuration de l'huile de pyrolyse est effectuée par un séparateur, en particulier un séparateur d'épuration à deux phases (16).

11. Procédé selon l'une des revendications précédentes, **caractérisé en ce que** la première centrifugeuse est activée pour la préépuration en fonction de la teneur en solides de l'huile de pyrolyse.

12. Procédé selon l'une des revendications précédentes, **caractérisé en ce que** le chauffage de l'huile de pyrolyse dans l'étape b) est effectué par un préchauffeur (5, 17), en particulier un échangeur de chaleur à plaques, un échangeur de chaleur à faisceaux de tubes ou un préchauffeur électrique.

13. Procédé selon l'une des revendications précédentes, **caractérisé en ce qu'**après le chauffage de l'huile de pyrolyse dans l'étape b), une valeur réelle d'une première grandeur de process est saisie et l'épuration de l'huile de pyrolyse n'a lieu que si une valeur de consigne de la première grandeur de process est dépassée.

14. Procédé selon la revendication 13 **caractérisé en ce que** l'huile est ramenée dans une cuve avec l'huile de pyrolyse non épurée si la valeur de consigne de la première grandeur de process n'est pas dépassée.

15. Procédé selon l'une des revendications 13 ou 14, **caractérisé en ce que** la grandeur de process est la température de l'huile de pyrolyse, la viscosité de l'huile de pyrolyse, la masse volumique de l'huile de pyrolyse et/ou des grandeurs de process pouvant en être dérivées.

16. Procédé selon l'une des revendications précédentes, **caractérisé en ce qu'**après son épuration dans l'étape a), l'huile de pyrolyse épurée est évacuée vers un réservoir (20) en fonction d'une deuxième grandeur de process.

17. Procédé selon la revendication 16, **caractérisé en ce que** la deuxième grandeur de process est le niveau de remplissage du réservoir (20).

18. Procédé selon l'une des revendications précédentes, **caractérisé en ce que** la durée de passage du produit ou d'une unité de volume du produit dans le processus est inférieure à 20 minutes.
